# EUROPEAN PATENT SPECIFICATION

(11) **EP 0 735 941 B1**
(45) Date of publication and mention of the grant of the patent: **07.04.1999**
(21) Application number: 95920916.4
(22) Date of filing: 06.06.1995
(51) Int. Cl.: B29C 33/00, B29C 67/00, B68G 7/00, B68G 11/02

(54) **METHOD AND APPARATUS FOR FABRICATING AN INHOMOGENEOUS PRODUCT AND THE PRODUCT FABRICATED BY THE METHOD**
VERFAHREN UND VORRICHTUNG ZUM HERSTELLEN EINES INHOMOGENEN GEGENSTANDES UND DURCH DIESES VERFAHREN HERGESTELLTER GEGENSTAND
PROCEDE ET APPAREIL DE FABRICATION D'UN PRODUIT NON HOMOGENE ET PRODUIT OBTENU PAR CE PROCEDE

(30) Priority: 07.06.1994 FI 942673
(43) Date of publication of application: 09.10.1996
(73) Proprietor: Vesa, Juha, 20610 Turku (FI)
(72) Inventor: Vesa, Juha, 20610 Turku (FI)
(74) Representative: Blomquist, Tuula Maria Ingeborg
(86) International application number: FI9500322
(87) International publication number: WO9533610

(56) References cited:
- FI-B- 90 651

## Description

The present invention relates to a method and an apparatus for the production of a part of inhomogenous material density, such as an ergonomically formed car seat pad, from a raw material compound in a gas-pervious mould made principally of two main parts which at least partly are movable against each other, and which at least at one stage of the production is positioned in a gas flow of a flow chamber in such a way that the gas flow flows through the mould and the raw material compound. The method according to the invention includes the following sequences: a filling sequence of the mould, during which the raw material compound is fed into the mould; a heating sequence, during which the raw material compound in the mould is heated; a pressing sequence, during which the raw material in the mould is pressed in a pre-selected shape by closing the opposite form parts against each other, and a cooling sequence, during which the pressed raw material compound is cooled. The present invention also relates to a product made by this method.

International Patent Application WO 91/18828 discloses an apparatus for the production of formed parts, such as seat pads, in a gas-pervious mould. The production of the seat pads is carried out by positioning the mould in a flow chamber and filling it with padding material by means of vacuum pressure, which mould in addition to the padding material contains binding fibres melting under the influence of heat. After the mould has been filled, hot air is passed through the filling chamber, which hot air then also flows through the mould and the layer of padding material contained in it. When the temperature of the padding material has risen to a sufficiently high level, the binding fibres of the padding material melt and form bonds therein. After the heating sequence, the mould and the moulded part contained in it are cooled by leading cold air through the mould, so as to solidify the binding material. The parts of the mould can be pressed together after the heating sequence.

When forming seat pads an ergonomically right shaping of the seat pad is necessary. In case of e.g. a car seat pad, the seat pad should support the passanger sidewise also. Therefore, the sides of the seat pad should be higher than the middle part thereof and have a relatively stabile construction. The middle part of the seat pad should however be preferably soft. It is difficult to produce a seat pad which responds to both requirements from a homogenous raw material. A seat pad produced of a homogenous raw material gives either too feeble support sidewise, or it is too hard to sit on.

It is an object of the present invention to provide a improved method and apparatus for the production of a moulded part, such as a car seat pad.

The aim is thereby to provide a method and an apparatus which enables the production of a part of an inhomogenous material density, which e.g. as a car seat pad gives the needed side support, and of its middle part a feeling of comfortable softness.

It is thereby a particular object of the invention to provide a method and an apparatus which enable a simple moulding of parts having zones of different material density.

In order to achieve the above mentioned objects, the method according to the present invention for the production of parts of inhomogenous material density is characterized in that in the mould producing the part is composed before the final cooling of the part at least two different zones, of which in the first zone is composed with araw material mixture with a greater material density than in the second zone. The zones of different material density are composed preferably either by pressing the parts of the mold during the pressing sequence towards each other a longer distance at the first zone than at the second zone, which increases the density of raw material mass in the first zone compared to the second zone, and during the pressing sequence a part of inhomogenous material density is produced; or in such a way that the first zone of the mould is already during the filling sequence filled with a raw material mixture having a greater density than the second zone, by arranging a greater raw material carrying gas flow through the mould parts confining the first zone then through mould parts confining the second zone, when also at an even pressure during the pressing sequemce a part of inhomogenous material density is created.

According to a preferred embodiment of the invention a mould with a continuos cavity for raw material is during the filling sequence filled with a raw material mass mainly having a principally even material density throughout the whole mould. During the pressing sequence different parts of the mould confining to the raw material mass, which are arranged to be movable at different distances in relation to each other, are pressed into the mould in such a way, that at least two parts of different densities are formed inside the mouldable part. In this mould the moving parts of the mould move in the first zone i.e. in the zone having a greater material density a longer distance into the mould than in the second zone i.e. the zone of the lesser density. Thereby the different parts of the mould compress a bigger amount of raw material in the first zone, i.e. in the zone having a greater material density than in other zones of the mould and forms in this point of the product to be a firmer part compared to other parts.

When manufacturing e.g. car seat pads the previously mentioned mould can be built such a way that on the sides of the moulded pads are created zones of greater material density, and a lowest density zone is created in the middle part of the seat. The density can be arranged to be increased step by step, by bigger or smaller steps, from the middle part towards the edges of the seat.

The above described mould according to one embodiment of the invention can be manufactured of mainly two mould parts, the first uniform main part of the mould, and the second moving main part of the mould consisting of two or more smaller parts movable in relation to each other. The first uniform main part of the mould is preferably held immobile during the pressing sequence. The moving parts of the second main part of the mould are pressed at different long distances towards the first main part or into different deepness inside the mould.Thus zones of different density are composed between the first main part and the moving parts.

The second main part can be manufactured e.g. of movable parts, which are fitted in the mould seen from its inner side, stepwise in such a way that the inner space of the mould grows step by step from the zone of lesser to the zone of greater raw material density, that is that the inner surface of the other main part is stepped. Into the more movable parts in relation to each other the second part of the mould is divided the smaller are the steps between the different parts.

After the heating sequence the movable parts of the second main part of the above described mould are pressed towards the first main part of the mould in different distances, in such a way that the stepping inside the mould disappears: and also the second main part of the mould forms a uniform, mainly smooth inner surface of the mould.

According to another embodiment of the invention is to compose the both main parts of the mould of uniform pieces. In this case inside of at least either main part of the mould is fitted a separate inner part of the mould or a shell of the mould , at the place where the greater material density zone is situated, with which the mould forms a two shell structure mainly conforming with the inner surface of the particular mould.

This inner mould part or inner shell is preferably being fitted in the mould in such a way that during the filling sequence of the mould the shell is fast to the inner surface of the said main part of the mould, or at least very close to this surface. The inner part of the mould is arranged to be movable mainly perpendicularly in relation to the surface of the main part of the particular mould so that the shell can be pressed towards the inner part of the mould.

During the pressing sequence after the heating sequence, the above mentioned inner part of the mould or shell is pressed into the mould in such a way that between this inner part and the inner surface of the particular mould is created an opening, whereby at the place of the zone of greater raw material density is created a denser raw material mass layer than at places of zones where there is no separate inner shell. The distance of the movable shell to the particular main part can be regulated in order to press the raw material mass at a desired higher pressure at this zone than at the places of zones of lesser material density.

When moulding a car seat pad, a separate movable inner shell is preferably fitted on the sides of the mould, that is on the sides of the future sitting pad, which can be pressed inside the mould e.g. at a distance of about 60-80 mm, whereas the half of the particular mould is pressed only at about 5-15 mm towards the other half of the mould. In such a way it is possible to create a much denser and thus firmer edge in the seat pad than with an even pressure..

On the other hand the material density in the mould can be created to be greater e.g. on sides of the mould so that is arranged the raw material mass carrying gas-flow to be bigger in the places of gas pervious mould, where it is desired to get a great raw material mass density.Then it is preferable to construct the mould in such a way that the the gas-perviousness of the mould is bigger in those places of the mould, where a greater raw material mass density is required than in other places of the mould; that is bigger gas-pervious holes or a bigger quantity of gas-pervious holes are being formed in those places of the mould than in other places of the mould. The above mentioned mould can be compressed during the pressing sequence equally together, which means the same distance along with the whole lenght of the mould.

The invention will be described in the following in more details with reference to the accompanying drawings, in which
FIGS. 1-3 describe schematically as a cross section an apparatus as one embodiment of the invention in different sequences of the mouldable product:
FIGS. 4-5 describe schematically as a cross section an apparatus as second embodiment of the invention in different sequences of the mouldable product;
FIGS. 6-7 describe schematically as a cross section an apparatus as third embodiment of the invention in different sequences of the mouldable product, and
FIG. 8 describes schematically as a cross section a car seat pad made with the method and the apparatus according the invention.

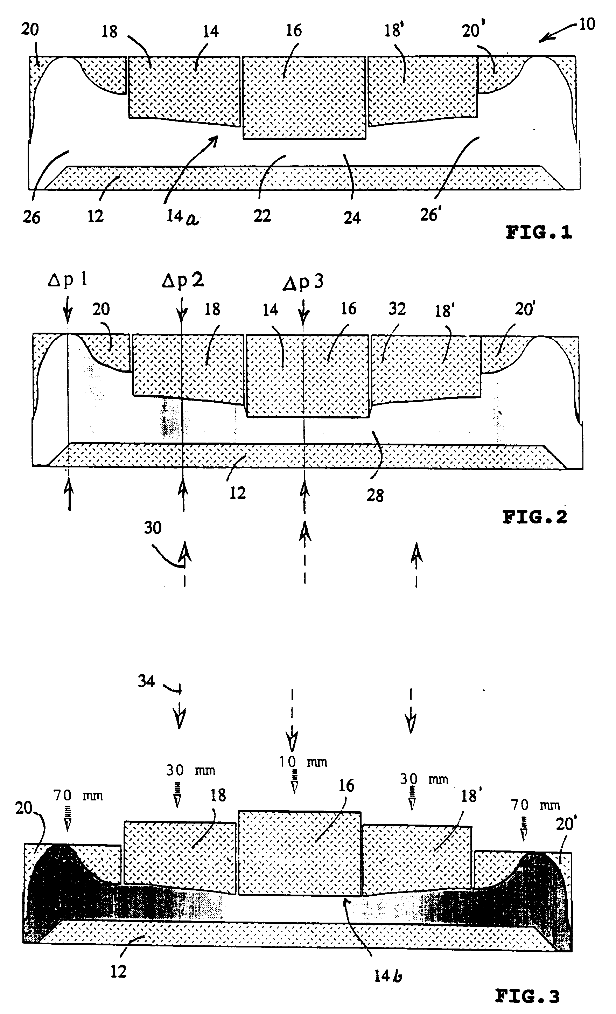

Figure 1 shows the mould 10 which is mainly composed of two main parts 12 and 14 of the mould. The first part 12 of the mould is composed of uniform part and is essentially stationary fitted in a filling chamber, not shown on these pictures. The second main part 14 of the mould is composed mainly of five in relation to each other moving separate parts 16, 18, 18', 20 and 20'. The inner surface 14a of the main part 14 of the mould, is thus composed to be in it's shape variable.. Between the main parts of the mould is created a cavity 22, which is during the filling sequence of the moulding process filled with a raw material mass.

During the filling sequence the different parts 16, 18,18', 20 and 20' form a cavity stepwise expanding from the middle part 24 towards the side parts 26, 26', which preferably will be totally filled with a raw material mass.

Figure 2 shows at the heating sequence the mould 10 on Fig. 1, which mould is filled with raw material mass 28. Hot air is led through the mould 30 in order to partly melt the raw material mass. The total pressure drops dp1, dp2 and dp3 produced over the mould and the raw material mass are almost the same in spite of different thicknesses of the raw material layers ,because the different zones of the mould 16, 18, 18', 20 and 20' are formed of the material or filled with filling material 32, which suitably increases the pressure drops at the places where required. The pressure drop caused by the parts of the mould is big e.g. in the middle part of the mould, where the pressure drop caused by the raw material mass is small. On the contrary the pressure drop caused by the parts of the mould is small on the edges of the mould, where the pressure drop caused by the raw material mass is big.

Figure 3 shows during the pressing sequence the mould 10 Figs. 2 and 3, where the different parts 16, 18, 18', 20 and 20' of the main part of the mould 14 are pressed towards the first main part 12 of the mould. The movable middle part 16 is least moved e.g. only at about 10 mm towards the first main part 12, whereby the density of the material in the middle part of the product produced in the mould will be proportionally small. The movable parts 18 and 18' being on the sides of the movable middle part 16 are moved e.g. at 30 mm, that is a distance of three times compared to the middle part., when at these points the raw material mass will be compressed considerably more than on the middle part. The movable mould parts 20 and 20*'* on the sides of the mould are being moved for example at a distance of 70 mm, in order to create a dense and firm edge. Preferably the mould parts 16, 18, 18', 20 and 20' are composed in such a way that when optimally pressed towards the immovable mold part 12, a smooth uniform surface 14b of desired shape is created on the second main part 14 of the mould.

The main parts 12 and 14 of the mould being as on Fig. 3 pressed towards each other cooling air 34 is led in to the mould to cool the mouldable product to its final shape. On the Fig. 3 there has been an attempt to describe the changes in material density of the mouldable product in different shadings of black, from small density in the middle part to big densities towards the edges.

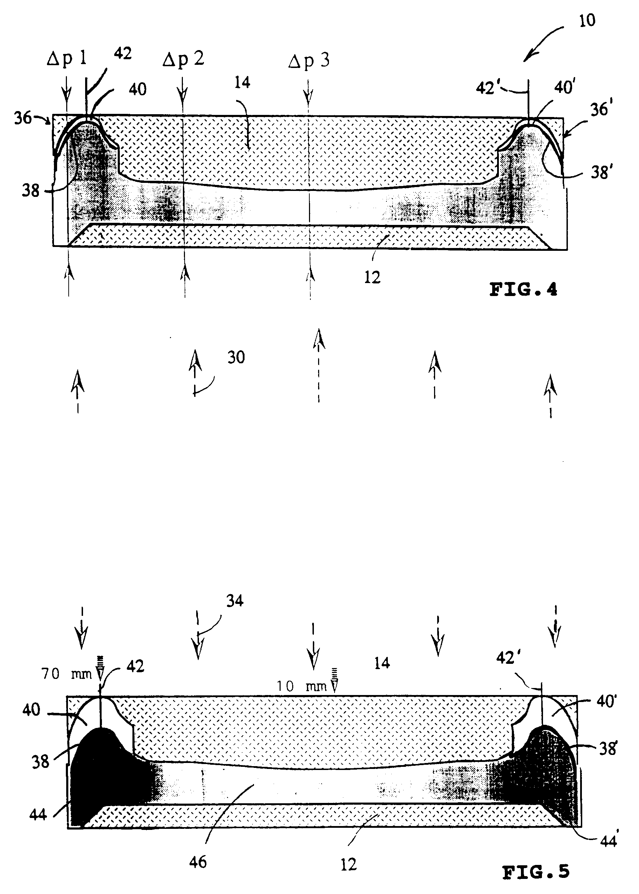

Figures 4 and 5 show another mould according to the invention for producing of an in material density inhomogenous product. The figures include the same reference numbers as on Figs. 1-3 where applicable. On the Figure 4 it is shown the mould 10 during the filling and heating sequences. The main parts 12 and 14 of the mould are mainly composed of one piece and filled with filling materials to level the pressure drop in all parts of the mould.

Further, on the side 36 and 36s of the main part of the mould 14, inner shell construction 38 and 38' are fitted, which cover a part of inner side of the main part 14 of the mould. The shell constructions are arranged to be movable in such a way that the gap 40 and 40*'* between them and the particular mould can be regulated to be as big as desired. The separate shell construction 38 and 38' can be pressed towards the main part 12 of the mould e.g. with the bars 42 and 42'.

Figure 5 shows a mould construction according to Fig. 4 during the pressing and cooling sequences. During the pressing sequence the shell constructions 38 and 38' are pressed by the bars 42 and 42' towards the opposite main part 12 of the mould in such a way that the shell construction is moved for example at 70 mm nearer this main part 12. At the same time the other half of the mould, that is the other main part 14, where the separate movable parts 38 and 38' are being fixed, is pressed e.g. at about 10 mm towards this opposite main part 12.

Due the different compression distances, that is the distance 40 and 40' between the particular mould 12 and the separate inner shell part 38 and 38', the density of the raw material mass inside the mould increases in the edge zones 44 and 44' more than in the middle part of the mould 46.

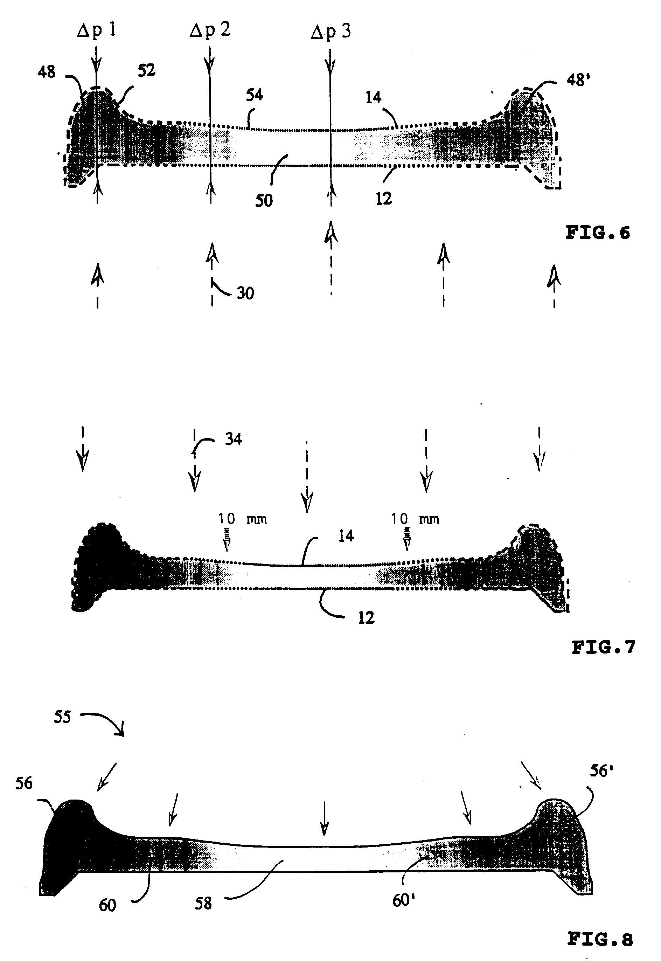

Figures 6 and 7 show the third apparatus according to the invention, where an in material density inhomogenous product can be produced. In Figures 6 and 7 the same reference numbers where applicable have been used as in Figs. 1-5. In the mould there are mainly two main parts 12 and 14, which during the pressing sequence can be pressed against each other. During the filling sequence raw material is transported by a carrying gas inside the mould through a infeed opening, which is not described in the Figure. The carrying gas flows out from the mould through the openings of the mould walling, aswell as from the moulds described on previous Figures.

In Figures 6 and 7 there are however composed for the gas at different parts of the mould through the walls of the mould flow-through openings of different size, that is different size open area in different parts of the mould. Thus the resistance of flow of the gas is unequal at different points of the mould. and the gas flows most of all through the walls of the mould where the openings are the biggest or where the open area is the largest per the area of the mould. Into those parts of the mould, where there are on the walls of the mould big flow-through openings for the gas, is a bigger raw material mass transported with the gas than into the parts of the mould through which the flow of the gas is small.

During the filling sequence shown in Fig. 6 the raw material mass is piled up more in the edges 48 and 48*'* of the mould, where there are large gas flow-through openings, than in the middle part 50 of the mould, where there are small gas flow-through openings. Thus a greater density of the raw material is created on the edge-areas 48 and 48' than in the middle area 50.of the mould.

Figure 7 shows a mould according Figure 6 during pressing and cooling sequence. During the pressing sequence the second main part 14 of the mould is evenly pressed towards the opposite main part 12 e.g. at 10 mm.

The gas flow carrying raw material fibres or raw material of other form can on demand also to be regulated so that on the walls of the mould there are composed at different points of the mould smaller or bigger quantity of equal size gas flow-through openings. Then more raw material is piled up in points where there are more gas flow-through openings than in other points.

Figure 8 shows a car seat pad 55, which is manufactured with polyester fibres by means of the method according the invention. The densities on the edge areas 56 and 56*'* of the pad are 80 - 100 g/l, the density of the middle part only 40 g/l and the density of the areas 60 and 60*'* between the middle area and the edge area is about 60 g/l. The seat pad is thus adequate soft on its middle part, but however is giving the desired support on the edges.

The invention is not intended to be limited to the embodiments described above, but the purpose is to be able to apply within the scope of the invention defined in the appended claims.

## Claims

1. A method for the production of a product of inhomogenous material density, such as an ergonomically shaped car seat pad, from a raw material mass in a gas-pervious mould composed principally of two main parts which at least partly are movable towards each other, and which at least at one stage of the production is fitted in a gas flow of a flow chamber in such a way that the gas flow flows through the mould and the raw material mass and which method includes at least the following sequences:
- a filling sequence of the mould, during which the raw material mass is fed into the mould;
- a heating sequence, during which the raw material mass in the mould is heated;
- the pressing sequence, during which the raw material mass in the mould is pressed in a desired shape by closing the opposite form parts towards each other, and
- a cooling sequence, during which the pressed raw material mass is cooled,
characterized in that
- inside the mould (10) is composed prior to the final cooling of the product at least two different zones (24, 26, 44, 46, 48, 50), of which in a first zone (26, 44, 48) is composed in raw material density a denser raw material mixture than in a second zone (24, 46, 50), when the zones different material densities are preferably composed either in such a way that
- a opposite parts of the mould (12, 14, 16, 18, 20, 38) are pressed during the pressing sequence towards each other at a longer distance in the point of the first zone than in the point of the second zone, when the density of the raw material mass increases in the first zone compared to the second zone; when at the pressing sequence a product of in material density inhomogenous product (55) is created, or in such a way that
- the first zone (48) of the mould is filled during the filling sequence with a denser raw material mixture than the other zone (50) by arranging a bigger gas-flow carrying the raw material mass through the mould parts limiting the first zone than through the mould parts limiting the second zone, when even with an equal compression during the pressing sequence a in material density inhomogenous product is created.

2. A method according to claim 1, characterized in that
- at the filling sequence the mould is filled with a raw material mass whose material density is mainly even throughout the whole mould, and that
- at the pressing sequence the different parts(16,18,20) of the mould limiting to the raw material, which parts are being arranged to be movable in relation to each other, are pressed inside the mould in such a way that they in the point of the first or in material density greater zone are moving a longer distance inside the mould than in the point of second or less dense zone.

3. A method according to claim 2, where a mould is used, which is composed of mainly two main parts (12, 14), the first main part being composed of a uniform structure (12) and the second main part (14) composed of many parts being movable in relation to each other , characterized in that
- the first main part (12) of the mould is held immovable during the pressing sequence, and the moving different parts (16,18,20) the second main part are pressed towards the first main part in such a way that the parts are moving at different distances and composing zones of different densities between the first main part and themself

4. A method according to claim 2, where a mould is used, which is composed mainly of two main parts (12, 14) and of at least one inside the second main part movable fitted inner mould part (38), characterized in that
- during the pressing sequence the movable fitted inner mould part (38) inside the second main part is pressed deeper inside the mould than this main part (14), when a zone of a greater material density is created at the point of this inner mould part.

5. A method according to claim 1, where a gas-pervious mould is used, of which gas-perviousness is bigger in the part surrounding at least one zone of the mould than in other parts of the mould, characterized in that
- at the filling sequence a more dense mixture is composed by means of a bigger gas flow in that zone (48) of the mould which is surrounded by the mould part with bigger gas-perviousness than in other zones (50) of the mould, and that the mould is pressed evenly together during the pressing sequence.

6. An apparatus for the moulding of an inhomogenous product (55), as an ergonomically shaped car seat, from a raw material mass, which includes a gas-pervious and in the gas-flow fitted mould (10), which is composed principally of two main parts (12, 14) moving at least partly towards each others, characterized in that
- the mould, which has a continous moulding cavity (22) for the raw material, has at least two different zones (24, 26, 44, 46, 48, 50), a zone of greater raw material density and a zone of lesser raw material density.

7. An apparatus according to claim 6, characterized in that
- at least the other main part (14) of the mould is composed of at least two, preferable several adjacent movable parts (16,18,20) in relation to each other, of which the parts (20)at the point of a zone with greater material density can be pressed deeper inside the mould than the parts (16,18) at the point of a zone with lesser material density.

8. An apparatus according to claim 7, characterized in that
- the adjacent mould parts (16, 18, 20) form in the mould during the filling sequence a stepped inner surface, different from the shape of the moldable product (55); and at the pressing sequence a plain inner surface (14a) with the same shape as product to be moulded

9. An apparatus according to claim 6, characterized in that
- at least in the other main part of the mould (14) is fitted at the point of a zone(44) with greater raw material density an inner shell (38) following this main part (14) , the distance (40) odf which from this main part can be regulated in order to press the raw material mass in the mould at this zone (44) at a bigger pressure than at the zones with lesser raw material density (46).

10. An apparatus according to claim 6, characterized in that
- the gas-perviousness of the mould at least at one point of the mould, as in the part surrounding the zone of greater raw material density (48), is bigger than in other parts (50) of the mould, and that at least one of the main parts of the mould (14) can be pressed as a whole towards the other main part (12) of the mould.

11. A moulded product (55), such as an ergonomically shaped car seat pad, which product is moulded of a porous raw material mass in a gas-pervious mould, which at least at one stage of the process is fitted in the gas flow of a flow chamber in such a way that the hot gasflow flows through the mould and the raw material mass, characterized in that
- the raw material mass in the uniform product is divided in the desired way stepless inhomogenically in such a way that density of the raw material mass in desired zones ( 56 )of the product is greater than in other zones (58).

## Patentansprüche

1. Verfahren zur Herstellung eines Produktes mit inhomogener Massendichte, wie beispielsweise ein ergonomisch geformtes Fahrzeugsitzpolster, aus einer Rohmaterialmasse in einer gasdurchlässigen Form, die im wesentlichen aus zwei zumindest teilweise aufeinander zu bewegbaren Hauptteilen besteht und die zumindest in einer Herstellungsstufe in einen Gasstrom einer Strömungskammer derart eingesetzt wird, dass der Gasstrom durch die Form und die Rohmaterialmasse strömt, und wobei das Verfahren zumindest die nachfolgenden Schritte enthält:
- einen Füllschritt der Form, währenddem die Rohmaterialmasse in die Form eingespeist wird,
- einen Erwärmungsschritt, währenddem die Rohmaterialmasse in der Form erwärmt wird,
- den Pressschritt, währenddem die Rohmaterialmasse in der Form durch Nähern der einander gegenüberliegenden Formteile in eine gewünschte Form gedrückt wird, und
- einen Kühlschritt, währenddem die zusammengepresste Rohmaterialmasse gekühlt wird,
dadurch gekennzeichnet, dass
- in der Form (10) vor dem abschließenden Kühlen des Produktes wenigstens zwei verschiedene Bereiche (24, 26, 44, 46, 48, 50) gebildet werden, wovon in einem ersten Bereich (26, 44, 48) eine bezüglich der Rohmaterialdichte dichtere Rohmaterialmischung gebildet wird als in einem zweiten Bereich (24, 46, 50), wobei die Bereiche mit verschiedener Massendichte vorzugsweise entweder dergestalt gebildet werden, dass
- einander gegenüberliegende Teile der Form (12, 14, 16, 18, 20, 38) während des Pressvorgangs in dem ersten Bereich um eine längere Wegstrecke aufeinander zu zusammengedrückt werden als in dem zweiten Bereich, wobei sich die Dichte der Rohmaterialmasse in dem ersten Bereich verglichen zum zweiten Bereich erhöht, so dass beim Pressvorgang ein Produkt mit inhomogener Massendichte (55) erzeugt wird, oder dergestalt, dass
- der erste Bereich (48) der Form während des Füllvorgangs mit einer dichteren Rohmaterialmischung befüllt wird als in dem anderen Bereich (50), indem für einen größeren Gasstrom, der die Rohmaterialmasse mit sich führt, durch die den ersten Bereich begrenzenden Formteile hindurch gesorgt wird als durch die Formteile hindurch, die den zweiten Bereich begrenzen, so dass sogar mittels einer gleichmäßigen Verdichtung während des Pressvorgangs ein Produkt mit inhomogener Massendichte erzeugt wird.

2. Verfahren nach Anspruch 1, dadurch gekennzeichnet, dass
- beim Füllvorgang die Form mit einer Rohmaterialmasse gefüllt wird, deren Massendichte im Wesentlichen über die gesamte Form hinweg gleichmäßig ist, und dass
- beim Pressvorgang die verschiedenen Teile (16, 18, 20) der Form, die das Rohmaterial begrenzen und zueinander bewegbar angeordnet sind, in der Form dergestalt zusammengedrückt werden, dass sie in dem ersten Bereich oder Bereich mit höherer Massendichte um eine längere Wegstrecke in die Form eingedrückt werden als in dem zweiten Bereich oder Bereich mit geringerer Dichte

3. Verfahren nach Anspruch 2, bei dem eine Form benutzt wird, die aus im Wesentlichen zwei Hauptteilen (12, 14) besteht, wobei das erste Hauptteil aus einer gleichförmigen Struktur (12) gebildet ist und das zweite Hauptteil (14) aus vielen, zueinander beweglichen Teilen gebildet ist, dadurch gekennzeichnet, dass
- das erste Hauptteil (12) der Form während des Pressvorgangs unbeweglich gehalten wird und die sich bewegenden verschiedenen Teile (16, 18, 20) des zweiten Hauptteils zum ersten Hauptteil dergestalt gedrückt werden, dass die Teile um verschiedene Wegstrecken bewegt werden und zwischen dem ersten Hauptteil und ihnen selbst Bereiche mit verschiedenen Dichten gebildet werden.

4. Verfahren nach Anspruch 2, bei dem eine Form eingesetzt wird, die aus im Wesentlichen zwei Hauptteilen (12, 14) und wenigstens einem in dem zweiten Hauptteil bewegbar eingesetzten inneren Formteil (38) besteht, dadurch gekennzeichnet, dass
- während des Pressvorgangs das bewegbar eingesetzte innere Formteil (38) in dem zweiten Hauptteil tiefer in die Form eingedrückt wird als dieses Hauptteil (14), so dass an diesem inneren Formteil ein Bereich mit größerer Massendichte erzeugt wird.

5. Verfahren nach Anspruch 1, bei dem eine gasdurchlässige Form eingesetzt wird, in der in demjenigen Teil, das zumindest einen Bereich der Form umgibt, die Gasdurchlässigkeit größer ist als in den anderen Teilen der Form, dadurch gekennzeichnet, dass
- beim Füllvorgang mittels eines größeren Gasstroms in demjenigen Bereich (48) der Form, der von dem Formteil mit größerer Gasdurchlässigkeit umgeben ist als in anderen Bereichen (50) der Form, eine höhere Dichtemischung gebildet wird, und dass die Form während des Pressvorgangs gleichmäßig zusammengedrückt wird.

6. Vorrichtung zum Formen eines inhomogenen Produkts (55), wie beispielsweise eines ergonomisch geformten Fahrzeugsitzes, aus einer Rohmaterialmasse, die eine gasdurchlässige und in den Gasstrom eingesetzte Form (10) enthält, welche im Wesentlichen aus zwei Hauptteilen (12, 14) besteht, die sich wenigstens teilweise gegeneinander bewegen, dadurch gekennzeichnet, dass
- die Form, die einen durchgehenden Formhohlraum (22) für das Rohmaterial besitzt, wenigstens zwei verschiedene Bereiche (24, 26, 44, 46, 48, 50) aufweist, einen Bereich mit größerer Massendichte und einen Bereich mit geringerer Massendichte.

7. Vorrichtung nach Anspruch 6, dadurch gekennzeichnet, dass
- wenigstens das andere Hauptteil (14) der Form aus wenigstens zwei, vorzugsweise mehreren nebeneinanderliegenden bewegbaren Teilen (16, 18, 20) besteht, wovon die Teile (20) im Bereich mit größerer Massendichte tiefer in die Form eingedrückt werden können als die Teile (16, 18) in dem Bereich mit geringerer Massendichte.

8. Vorrichtung nach Anspruch 7, dadurch gekennzeichnet, dass
- die nebeneinanderliegenden Formteile (16, 18, 20) sich in der Form während des Füllvorgangs eine gestufte, nach der Form des formbaren Produktes (55) verschiedene Innenfläche bilden und beim Pressvorgang eine ebene Innenfläche (14a) mit der gleichen Form wie das zu formende Produkt bilden.

9. Vorrichtung nach Anspruch 6, dadurch gekennzeichnet, dass wenigstens im anderen Hauptteil der Form (14) in einem Bereich (44) mit größerer Massendichte eine diesem Hauptteil (14) folgende Innenschale (38) eingesetzt ist, deren Abstand (40) von diesem Hauptteil eingestellt werden kann, um die Rohmaterialmasse in der Form in diesem Bereich (44) mit einem größeren Druck als in den Bereichen mit geringerer Massendichte (46) zusammenzupressen.

10. Vorrichtung nach Anspruch 6, dadurch gekennzeichnet, dass
- die Gasdurchlässigkeit der Form wenigstens an einer Stelle der Form, wie in dem Teil, das den Bereich größerer Massendichte (48) umgibt, größer ist als in anderen Teilen (50) der Form, und dass wenigstens eines der Hauptteile der Form (14) als Ganzes zum anderen Hauptteil (12) der Form gedrückt werden kann.

11. Geformtes Produkt (55), wie beispielsweise ein ergonomisch geformtes Fahrzeugsitzpolster, welches Produkt aus einer porösen Rohmaterialmasse in einer gasdurchlässigen Form geformt ist, die in wenigstens einer Stufe des Prozesses in den Gasstrom einer Strömungskammer dergestalt eingesetzt ist, dass der heiße Gasstrom durch die Form und die Rohmaterialmasse strömt, dadurch gekennzeichnet, dass
- die Rohmaterialmasse in dem gleichförmigen Produkt in gewünschter Weise derart stufenlos inhomogen verteilt ist, dass die Dichte der Rohmaterialmasse in gewünschten Bereichen (56) des Produktes größer ist als in anderen Bereichen (58).

## Revendications

1. Procédé de production d'un produit à densité de matière inhomogène, tel qu'un support de siège de voiture configuré de façon ergonomique, à partir d'un volume de matière première dans un moule perméable aux gaz, constitué essentiellement de deux parties principales qui, au moins, partiellement, sont mobiles l'une vers l'autre et qui, au moins lors d'une étape de la production, est adapté dans un courant gazeux d'une chambre d'écoulement, d'une manière telle que le courant gazeux circule à travers le moule et le volume de matière première, procédé incluant au moins les séquences suivantes :
- une séquence de remplissage du moule, pendant laquelle le volume de matière première est amené dans le moule;
- une séquence de chauffage, pendant laquelle le volume de matière première se trouvant dans le moule est chauffé;
- la séquence de compression, pendant laquelle le volume de matière première se trouvant dans le moule est comprimé suivant une configuration souhaitée, en fermant les parties opposées du moule l'une vers l'autre, et
- une séquence de refroidissement, pendant laquelle le volume de matière première comprimé est refroidi,
caractérisé en ce que
- à l'intérieur du moule (10), avant le refroidissement final du produit, sont formées au moins deux zones différentes (24, 26, 44, 46, 48, 50), dans la première zone (26, 44, 48) desquelles un mélange de matière première ayant une densité de materiau plus forte que celui dans la seconde zone (24, 46, 50), lorsque les zones différentes par leur densité de materiau sont constituées, de préférence, soit d'une manière telle que
- des parties opposées du moule (12, 14, 16, 18, 20, 38) soient pressées pendant la séquence de compression l'une vers l'autre sur une distance plus grande au niveau du point de la première zone qu'au niveau du point de la seconde zone, ainsi la densité du volume de matière première augmente dans la première zone en comparaison à la seconde zone; donc pendant la séquence de compression un produit de densité de matériau inhomogène (55) est créé, soit d'une manière telle que
- la première zone (48) du moule soit remplie pendant la séquence de remplissage par un mélange de matière première plus dense que l'autre zone (50) en faisant passer un courant gazeux, transportant le volume de matière première à travers les parties du moule limitant la première zone, plus important qu'à travers les parties du moule limitant la seconde zone, lorsque même avec une compression égale pendant la séquence de compression, un produit à densité de matière inhomogène est créé.

2. Procédé selon la revendication 1, caractérisé en ce que
- au cours de la séquence de remplissage, le moule est rempli d'un volume de matière première dont la densité du matériau est essentiellement égale sur toute la longueur du moule, et en ce que
- au cours de la séquence de compression, les différentes parties (16, 18, 20) du moule limitant la matière première, parties agencées pour être mobiles les unes par rapport aux autres, sont pressées à l'intérieur du moule d'une manière telle qu'au niveau du point de la première zone ou zone de plus grande densité de matériau , elles se déplacent dans le moule sur une distance plus grande qu'au niveau du point de la seconde zone ou zone de moindre densité.

3. Procédé selon la revendication 2, où un moule est utilisé, lequel est composé essentiellement de deux parties principales (12, 14), la première partie principale étant composée d'une structure uniforme (12) et la seconde partie principale (14) étant composée de nombreuses parties qui sont mobiles les unes par rapport aux autres, caractérisé en ce que - la première partie principale (12) du moule est maintenue immobile pendant la séquence de compression, et les différentes parties mobiles (16, 18, 20), de la seconde partie principale, sont pressées vers la première partie principale, de telle manière que les parties soient déplacées sur des distances différentes et constituent des zones de densités différentes entre la première partie principale et elles-mêmes.

4. Procédé selon la revendication 2, où un moule est utilisé, lequel est constitué essentiellement de deux parties principales (12, 14) et d'au moins une partie de moule intérieure montée mobile à l'intérieur de la seconde partie principale (38), caractérisé en ce que
- pendant la séquence de compression, la partie de moule intérieure montée mobile (38) à l'intérieur de la seconde partie principale est pressée à l'intérieur du moule plus profondemént que cette partie principale (14), auquel cas une zone de densité de matière plus forte est créée au niveau de la région de cette partie intérieure de moule.

5. Procédé selon la revendication 1, où un moule perméable aux gaz est utilisé, dont la perméabilité aux gaz est plus importante dans la partie entourant au moins une zone du moule que dans les autres parties du moule, caractérisé en ce que
- au cours de la séquence de remplissage un mélange plus dense est effectué au moyen d'un courant gazeux plus grand dans cette zone (48) du moule qui est entourée par la partie du moule ayant une perméabilité aux gaz plus importante que dans les autres zones (50) du moule, et en ce que le moule est pressé de façon unif orme pendant la séquence de compression.

6. Dispositif pour mouler un produit inhomogène (55), tel qu'un siège de voiture configuré de façon ergonomique, à partir d'un volume de matière première, qui comprend un moule perméable aux gaz et adapté au passage d'un courant gazeux (10), lequel est composé essentiellement de deux parties principales (12, 14) se déplaçant, au moins partiellement, l'une vers l' autre, caractérisé en ce que
- le moule, qui comporte une cavité de moulage continue (22) destinée à la matière première , comporte au moins deux zones différentes (24, 26, 44, 46, 48, 50), une zone de matière première de plus grande densité et une zone de matière première de moins grande densité .

7. Dispositif selon la revendication 6, caractérisé en ce que
- au moins l'autre partie principale (14) du moule est composée d'au moins deux, de préférence plusieurs, parties mobiles adjacentes, (16, 18, 20) en relation l'une avec l'autre, dont les parties (20) au niveau du point d'une zone présentant une densité de matière plus grande peuvent être pressées sur une plus grande profondeur à l'intérieur du moule que les parties (16, 18) au niveau du point d'une zone présentant une densité de matière moins grande.

8. Dispositif selon la revendication 7, caractérisé en ce que
- les parties de moule adjacentes (16, 18, 20) forment dans le moule, pendant la séquence de remplissage une surface intérieure à gradins différente de la forme du produit moulable (55), et au cours de la séquence de compression, une surface intérieure plane (14a) présentant la même configuration que le produit à mouler.

9. Dispositif selon la revendication 6, caractérisé en ce que
- au moins dans l'autre partie principale du moule(14), on adapte, au niveau du point d'une zone (44) présentant une densité de matière première plus grande, une coquille intérieure (38) suivant cette partie principale (14), dont la distance (40) à cette partie principale peut être réglée afin de comprimer le volume de matière première dans le moule au niveau de cette zone (44) à une pression plus importante que dans les zones présentant une densité de matière première moindre (46).

10. Dispositif selon la revendication 6, caractérisé en ce que
- la perméabilité aux gaz du moule, au moins au niveau d'une région du moule, telle que dans la partie entourant la zone à densité de matière première plus grande (48), est plus importante que dans les autres parties (50) du moule, et en ce que au moins l'une des parties principales du moule (14) peut être pressée dans son ensemble vers l'autre partie principale (12) du moule,

11. Produit moulé (55), tel qu'un support de siège de voiture configuré de façon ergonomique, produit qui est moulé à partir d'un volume de matière première poreuse dans un moule perméable aux gaz, lequel, au moins au cours d'une étape du procédé, est ajusté dans le courant gazeux d'une chambre d'écoulement d'une manière telle que le courant gazeux chaud circule à travers la moule et le volume de matière première, caractérisé en ce que
- le volume de matière première dans le produit uniforme est divisé de la façon souhaitée inhomogène et sans former de gradins, de façon que la densité du volume de matière première dans les zones souhaitées (56) du produit soit plus grande que dans les autres zones (58).
